# EUROPÄISCHE PATENTSCHRIFT

(11) **EP 3 136 555 B1**
(45) Veröffentlichungstag und Bekanntmachung des Hinweises auf die Patenterteilung: **09.10.2019**
(21) Anmeldenummer: 16001847.9
(22) Anmeldetag: 23.08.2016
(51) Int. Cl.: H02K 5/20, H02K 16/00, H02K 7/06, H02K 7/14, F16H 25/20, H02K 7/08

(54) **ANTRIEBSEINHEIT**
DRIVE UNIT
UNITE D'ENTRAINEMENT

(30) Priorität: 27.08.2015 DE 102015011061; 23.02.2016 DE 102016002056
(43) Veröffentlichungstag der Anmeldung: 01.03.2017
(73) Patentinhaber: Ehrt Maschinenbau GmbH, 53619 Rheinbreitbach (DE)
(72) Erfinder: Winters, Andreas, 42653 Solingen (DE)
(74) Vertreter: Sattler de Sousa e Brito, Clara

(56) Entgegenhaltungen:
- WO-A1-99/10965
- WO-A1-03/080316
- WO-A1-2007/113045

## Beschreibung

Die Erfindung betrifft eine Antriebseinheit mit einem Spindeltrieb und einem Spindeltrieb-Antriebsmotor. Die Erfindung betrifft weiterhin die Verwendung einer solchen Antriebseinheit für eine Werkzeug- und insbesondere Bohrpinole.

Die Linearantriebe bei Bohrpinolen, mit denen der lineare Vorschub der Bohrwerkzeuge realisiert wird, werden in der Regel mittels Kombinationen aus Zahnstange und elektromotorisch angetriebenem Ritzel ausgeführt. Derartige Bohrpinolen weisen den Nachteil relativ großer Außendimensionen auf. Alternativ sind auch hydraulische oder pneumatische Linearantriebe für Bohrpinolen bekannt, die jedoch infolge der notwendigen Bereitstellung einer hydraulischen oder pneumatischen Energiequelle und auch in konstruktiver Hinsicht relativ aufwendig sind.

Die WO 99/10965 A1, die WO 2007/113045 A1 sowie die WO03/080316 A1 offenbaren jeweils einen Antrieb, der sowohl eine lineare als auch eine rotatorische Bewegung oder eine Kombination aus beiden erlaubt.

Ausgehend von diesem Stand der Technik lag der Erfindung die Aufgabe zugrunde, einen Linearantrieb für eine Bohrpinole anzugeben, der möglichst kompakt ist.

Diese Aufgabe wird mittels einer Antriebseinheit gemäß dem Patentanspruch 1 gelöst. Vorteilhafte Ausgestaltungen der erfindungsgemäßen Antriebseinheit sind Gegenstände der weiteren Patentansprüche und ergeben sich aus der nachfolgenden Beschreibung der Erfindung.

Bei einer Antriebseinheit mit einem Spindeltrieb und einem (vorzugsweise elektrischen) Spindeltrieb-Antriebsmotor, bei der der Spindeltrieb-Antriebsmotor einen Stator und einen Rotor aufweist, ist erfindungsgemäß vorgesehen, dass eine Spindel des Spindeltriebs (zumindest teilweise) innerhalb des als Spindelmutter wirkenden und eine Hohlwelle umfassenden (oder vorzugsweise auch vollständig als Hohlwelle ausgebildeten) Rotors angeordnet ist. Durch die zumindest teilweise Anordnung der Spindel des Spindeltriebs innerhalb des als Spindelmutter wirkenden und eine Hohlwelle umfassenden Rotors des Spindeltrieb-Antriebmotors kann die Antriebseinheit besonders kompakt ausgeführt werden.

Für eine vorteilhafte und insbesondere möglichst spielfreie und reibungsarme Übersetzung der rotierenden Antriebsbewegung des Rotors des Spindeltrieb-Antriebsmotors in eine Linearbewegung der Spindel kann vorzugsweise vorgesehen sein, dass der Spindeltrieb als Kugelgewindetrieb oder als Rollengewindetrieb, dann insbesondere als Planetenrollengewindetrieb, ausgebildet ist.

Um ein Mitdrehen der axial beweglichen Spindel mit dem Rotor des Spindeltrieb-Antriebsmotors in vorteilhafter Weise zu vermeiden kann vorgesehen sein, dass die Spindel verdrehsicher (um ihre Längs- beziehungsweise Bewegungsachse) in einem Gehäuse der Antriebseinheit geführt ist.

In einer bevorzugten Ausgestaltung der erfindungsgemäßen Antriebseinheit kann diese in vorteilhafter Weise als Werkzeugpinole weitergebildet sein. Dazu kann diese eine innerhalb der eine Hohlwelle umfassenden (oder vorzugsweise vollständig als Hohlwelle ausgebildeten) Spindel drehbar und gleichzeitig axial festgelegt (d.h. unbeweglich oder in definierten Grenzen (jedoch kleiner als der maximale Linearhub des Spindeltriebs) beweglich) gelagerte Werkzeugspindel aufweisen. Die Werkzeugspindel kann weiterhin bevorzugt an einem Ende mit einem Werkzeugaufnahmekopf zur Aufnahme eines beliebigen Werkzeugs vorgesehen sein. Durch eine solche Ausgestaltung der erfindungsgemäßen Antriebseinheit bildet diese eine besonders kompakte Werkzeugpinole aus.

Eine erfindungsgemäß bevorzugte Verwendung einer solchen Werkzeugpinole liegt in der Nutzung als Bohrpinole, wozu die Werkzeugspindel endseitig einen Werkzeugaufnahmekopf für ein Bohrwerkzeug aufweist. Die Erfindung betrifft demnach auch eine Kombination einer solchen als Werkzeug- und insbesondere Bohrpinole ausgebildeten Antriebseinheit mit zumindest einem Werkzeug, insbesondere einem Bohrwerkzeugs, vorzugsweise einem (Bohr-)Werkzeugsatz mit einer Mehrzahl von unterschiedlichen (Bohr-)Werkzeugen, die jedoch identische Befestigungsschnittstellen zu Verbindung mit dem Werkzeugaufnahmekopf der Antriebseinheit aufweisen.

Für einen rotierenden Antrieb der Werkzeugspindel kann vorzugsweise ein sich von dem Spindeltrieb-Antriebsmotor unterscheidender (vorzugsweise elektrischer) Werkzeugspindel-Antriebsmotor vorgesehen sein. Denkbar sind jedoch auch Anwendungen, bei denen die Werkzeugspindel, gegebenenfalls unter Zwischenschaltung eines Übersetzungsgetriebes und/oder einer Kupplung, ebenfalls von dem Spindeltrieb-Antriebsmotor antreibbar ist.

Wiederum für eine möglichst kompakte Ausgestaltung der erfindungsgemäßen Antriebseinheit kann vorgesehen sein, dass der Werkzeugspindel-Antriebsmotor einen Stator und einen eine Hohlwelle umfassenden oder als Hohlwelle ausgebildeten Rotor umfasst, wobei ein Kupplungsabschnitt der Werkzeugspindel drehfest und axial verschiebbar innerhalb des Rotors des Werkzeugspindel-Antriebsmotors aufgenommen ist.

In einer bevorzugten Ausgestaltung der erfindungsgemäßen Antriebseinheit und damit auch der erfindungsgemäßen Kombination kann vorgesehen sein, dass der Spindeltrieb-Antriebsmotor und/oder der Werkzeugspindel-Antriebsmotor als Servomotor ausgebildet ist/sind. Der jeweilige Antriebsmotor ist demnach derart ausgebildet, dass dieser durch die Integration mindestens eines Sensors und die Auswertbarkeit der Messwerte dieses Sensors in einer Auswerteeinheit eine Kontrolle von zumindest der Winkelposition des Rotors und, daraus abgeleitet, vorzugsweise auch der Drehgeschwindigkeit und/oder der Drehbeschleunigung ermöglicht. Dabei kann weiterhin bevorzugt eine Regelung für die Winkelposition und/oder für einen oder mehrere sich aus der Winkelposition ableitende Parameter vorgesehen sein.

Eine für die Montage und/oder Wartung der erfindungsgemäßen Antriebseinheit vorteilhafte Ausgestaltungen kann vorsehen, dass das Gehäuse einen ersten Gehäuseteil aufweist, der ein Innenvolumen ausbildet, wobei ein zweites Gehäuseteil, an dem der Spindeltrieb-Antriebsmotor und/oder der Werkzeugspindel-Antriebsmotor drehfest befestigt ist, zumindest teilweise innerhalb des Innenvolumens des ersten Gehäuseteils drehfest und axial festgelegt (unbeweglich oder in definierten Grenzen (jedoch kleiner als der maximale Linearhub des Spindeltriebs) beweglich) angeordnet ist.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die Erfindung wird nachfolgend anhand eines in der Zeichnung dargestellten Ausführungsbeispiels näher erläutert. In der Zeichnung zeigt:

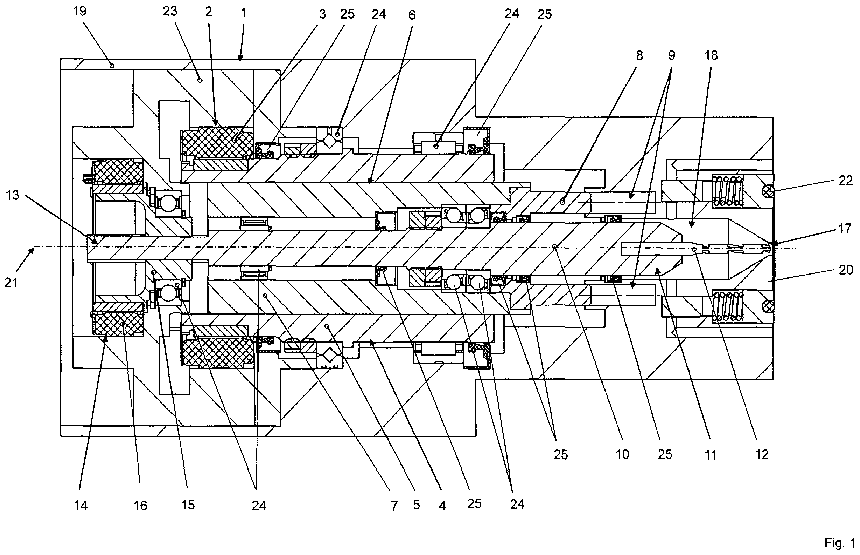

- Fig. 1:: eine erfindungsgemäße Antriebseinheit in einer vereinfachten Darstellung.

Die in der Zeichnung gezeigte Antriebseinheit umfasst ein mehrteiliges Gehäuse 1, innerhalb dessen ein Spindeltrieb und ein als Servomotor ausgebildeter elektrischer Spindeltrieb-Antriebsmotor 2 angeordnet ist. Der Spindeltrieb-Antriebsmotor 2 umfasst einen sowohl drehfest als auch axial unbeweglich innerhalb des Gehäuses 1 aufgenommenen Stator 3 sowie einen innerhalb des Stators 3 drehbar gelagerten Rotor 4. Der Spindeltrieb-Antriebsmotor 2 ist demnach als sogenannter Innenläufer ausgeführt. Der Rotor 4 umfasst eine Hohlwelle 5, deren Länge (Erstreckung in längsaxialer Richtung) deutlicher größer als die Länge des Stators 3 ist. Die Hohlwelle 5 ist daher zusätzlich über Wälzlager 24 innerhalb des Gehäuses drehbar gelagert. Dichtelemente in Form von Radialwellendichtringen 25 dichten dabei diese Drehlagerung gegenüber der Umgebung ab. Die Hohlwelle 5 dient als Spindelmutter des als Kugelgewindetrieb ausgebildeten Spindeltriebs. Dazu sind in der Hohlwelle 5 in bekannter Weise eine oder mehrere Kugeln (nicht dargestellt) gelagert, die in einer Spiralnut (nicht dargestellt) einer Spindel 6 des Spindeltriebs abrollen, wobei in Abhängigkeit von der Steigung der Spiralnut eine Drehbewegung der Hohlwelle 5 beziehungsweise des Rotors 4 des Spindeltrieb-Antriebsmotor 2 in eine Linearbewegung der Spindel 6 übersetzt wird. Um dabei sicherzustellen, dass die Drehbewegung des Rotors 4 ausschließlich in eine Linearbewegung der Spindel 6 übersetzt wird, weist diese eine Verdrehsicherung auf, die mehrere, an einem längsaxialen Ende mit einem Spindelhauptkörper 7 verbundene Führungszapfen 8 umfasst, die in komplementären Führungsöffnungen 9 des Gehäuses 1 axial beweglich geführt sind. Die Führung der Führungszapfen 8 in den Führungsöffnungen 9 ist dabei über Dichtelemente in Form von Radialwellendichtringen 25 abgedichtet.

Die Spindel 6 (bzw. der Spindelhauptkörper 7) des Spindeltriebs ist ebenfalls als Hohlwelle ausgebildet. Innerhalb der Spindel 6 ist eine Werkzeugspindel 10, die an einem längsaxialen Ende einen Werkzeugaufnahmekopf 11 ausbildet, über Wälzlager 24 drehbar gelagert. Auch diese Drehlagerung ist mittels Dichtelementen in Form von Radialwellendichtringen 25 gegenüber der Umgebung abgedichtet. Im vorliegenden Ausführungsbeispiel ist der Werkzeugaufnahmekopf 11 zur Aufnahme eines Bohrwerkzeugs 12 vorgesehen. Die Werkzeugspindel 10 ragt sowohl mit dem Werkzeugaufnahmekopf 11 als auch mit einem Kupplungsabschnitt 13 an dem bezüglich des Werkzeugaufnahmekopfs 11 distalen Ende aus der Spindel 6 des Spindeltriebs heraus. Dieser Kupplungsabschnitt 13 der Werkzeugspindel 10, der einen nicht-runden und beispielsweise quadratischen, fünfeckigen oder sechseckigen Querschnitt aufweisen kann, ist längsaxial beweglich und gleichzeitig verdrehsicher innerhalb eines Rotors 15 eines ebenfalls als Servomotor ausgebildeten (elektrischen) Werkzeugspindel-Antriebmotors 14 gelagert. Neben dem Rotor 15 umfasst dieser Werkzeugspindel-Antriebsmotor 14 noch einen Stator 16, der drehfest und axial unbeweglich innerhalb des Gehäuses 1 gelagert ist. Auch der Rotor 15 des Werkzeugspindel-Antriebmotors 14 ragt mit einem Abschnitt über den Stator 16 hinaus und ist in diesem Abschnitt über ein Wälzlager 24 in dem Gehäuse drehbar gelagert.

Bei einer Aktivierung des Werkzeugspindel-Antriebsmotors 10 wird die Werkzeugspindel 10 und damit das Bohrwerkzeug 12 drehend angetrieben. Unabhängig von diesem drehenden Antrieb der Werkzeugspindel 10 beziehungsweise des Bohrwerkzeugs 12 kann ein Vorschub für die Werkzeugspindel 10 und damit für das Bohrwerkzeug 12 durch eine entsprechende Aktivierung des Spindeltrieb-Antriebsmotors 2 eingestellt werden. Die sich aus dem Vorschub der Werkzeugspindel 10 in Verbindung mit der stationären Anordnung des Werkzeugspindel-Antriebsmotors 14 innerhalb des Gehäuses 1 ergebende Relativbewegung wird dabei durch die längsaxiale Beweglichkeit des Kupplungsabschnitts 13 der Werkzeugspindel 10 innerhalb des ebenfalls als Hohlwelle ausgebildeten Rotors 15 des Werkzeugspindel-Antriebsmotors 14 ermöglicht.

Die Fig. 1 zeigt die Werkzeugspindel 10 in der weitestmöglich eingefahrenen Stellung, die einer der Endstellungen des Spindeltriebs entspricht. Das in dem Werkzeugaufnahmekopf 11 der Werkzeugspindel 10 aufgenommene Bohrwerkzeug 12 ist dabei vollständig innerhalb des Gehäuses 1 der Antriebseinheit aufgenommen. Bei einer Aktivierung des Spindeltrieb-Antriebsmotors 2 wird die Werkzeugspindel 10 einschließlich des Bohrwerkzeugs 12 linear (in der Fig. 1 nach rechts) verschoben, wobei ein Werkzeugabschnitt des Bohrwerkzeugs 12 mehr oder weniger weit durch eine Werkzeugöffnung 17 des Gehäuses 1 herausgeführt wird. Die Werkzeugspindel 10 verbleibt dagegen auch dann vollständig innerhalb des Gehäuses 1 aufgenommen, wenn der maximale Linearhub für den Spindeltrieb erreicht ist. Dafür ist in dem Gehäuse 1 ein entsprechend dimensionierter Vorschubraum 18 vorgesehen.

Der Vorschubraum 18 ist zumindest teilweise innerhalb eines in Grenzen linear beweglich und kippbar innerhalb eines Hauptteils 19 des Gehäuses 1 gelagerten Kopfteil 20 des Gehäuses 1 ausgebildet. Die außenseitige Stirnseite dieses Kopfteils 20 dient primär dem Kontakt mit dem zu bearbeitenden Werkstück (nicht dargestellt), wobei durch die in Grenzen linear bewegliche und kippbare Lagerung des Kopfteils 20 in dem Hauptteil 19 des Gehäuses 1 eine nicht exakt rechtwinklige Ausrichtung der Kontaktfläche des zu bearbeitenden Werkstücks zu der Längsachse 21 der Antriebseinheit (die den Rotationsachsen der Rotoren 4, 15 der beiden Antriebsmotoren 2, 14 und der Werkzeugspindel 10 entspricht) ausgeglichen werden kann. Durch die Integration eines umlaufenden Dichtrings 22 in die außenseitige Stirnseite des Kopfteils 20 kann die Bearbeitungsstelle des zu bearbeitenden Werkstücks zudem gegenüber der Umgebung abgedichtet werden.

Für eine vorteilhafte Montage und Wartung der Antriebseinheit ist vorgesehen, dass der Hauptteil 19 des Gehäuses 1 ein Innenvolumen ausbildet, das (auch) in derjenigen Stirnseite, die bezüglich des Kopfteils 20 distal gelegen ist, offen ausgebildet ist. Über die Öffnung in dieser Stirnseite ist ein Einsatzteil 23 des Gehäuses 1 in das Innenvolumen einsetzbar und dort über beispielsweise ein oder mehrere Verschraubungen sowohl drehfest als auch axial unbeweglich fixierbar. An dem Einsatzteil 23 ist sowohl der Spindeltrieb-Antriebsmotor 2 als auch der Werkzeugspindel-Antriebsmotor 14 (jeweils über deren Rotoren 4, 15) befestigt. Dies ermöglicht, die beiden Antriebsmotoren 2, 14 einschließlich der mit dem Spindeltrieb-Antriebsmotor 2 verbundenen Spindel 6 und der mit dem Werkzeugspindel-Antriebsmotor 2 verbundenen Werkzeugspindel 10 als eine Einheit in den Hauptteil 19 des Gehäuses 1 einzusetzen und aus diesem herauszunehmen.

### Bezugszeichenliste

- 1: Gehäuse
- 2: Spindeltrieb-Antriebsmotor
- 3: Stator des Spindeltrieb-Antriebsmotors
- 4: Rotor des Spindeltrieb-Antriebsmotors
- 5: Hohlwelle des Rotors des Spindeltrieb-Antriebsmotors
- 6: Spindel
- 7: Spindelhauptkörper
- 8: Führungszapfen
- 9: Führungsöffnung
- 10: Werkzeugspindel
- 11: Werkzeugaufnahmekopf
- 12: Bohrwerkzeug
- 13: Kupplungsabschnitt der Werkzeugspindel
- 14: Werkzeugspindel-Antriebmotor
- 15: Rotor des Werkzeugspindel-Antriebsmotors
- 16: Stator des Werkzeugspindel-Antriebsmotors
- 17: Werkzeugöffnung des Gehäuses
- 18: Vorschubraum
- 19: Hauptteil des Gehäuses
- 20: Kopfteil des Gehäuses
- 21: Längsachse der Antriebseinheit
- 22: Dichtring
- 23: Einsatzteil des Gehäuses
- 24: Wälzlager
- 25: Radialwellendichtring

## Patentansprüche

1. Antriebseinheit mit einem Spindeltrieb und einem Spindeltrieb-Antriebsmotor, wobei der Spindeltrieb-Antriebsmotor einen Rotor (4) aufweist, eine Spindel (6) des Spindeltriebs innerhalb des als Spindelmutter wirkenden und eine Hohlwelle (5) umfassenden Rotors (4) angeordnet ist, **dadurch gekennzeichnet, dass** die axial bewegliche Spindel (6) verdrehsicher in einem Gehäuse (1) der Antriebseinheit geführt ist, wobei die Spindel eine Verdrehsicherung aufweist, die mehrere, an einem längsaxialen Ende mit einem Spindelhauptkörper (7) verbundene Führungszapfen (8) umfasst, die in komplementären Führungsöffnungen (9) des Gehäuses (1) axial beweglich geführt sind.

2. Antriebseinheit gemäß Anspruch 1, **dadurch gekennzeichnet, dass** der Spindeltrieb als Kugelgewindetrieb oder als Rollengewindetrieb ausgebildet ist.

3. Antriebseinheit gemäß einem der vorhergehenden Ansprüche, **dadurch gekennzeichnet, dass** innerhalb der eine Hohlwelle umfassenden Spindel (6) eine Werkzeugspindel (10) drehbar und axial festgelegt gelagert ist.

4. Antriebseinheit gemäß Anspruch 3, **dadurch gekennzeichnet, dass** die Werkzeugspindel (10) endseitig einen Werkzeugaufnahmekopf (11) für ein Bohrwerkzeug (12) aufweist.

5. Antriebseinheit gemäß einem der vorhergehenden Ansprüche, **dadurch gekennzeichnet, dass** die Antriebseinheit einen Werkzeugspindel-Antriebsmotor (14) umfasst.

6. Antriebseinheit gemäß einem der vorhergehenden Ansprüche, **dadurch gekennzeichnet, dass** der Werkzeugspindel-Antriebsmotor (14) einen eine Hohlwelle umfassenden Rotor (15) aufweist, wobei ein Kupplungsabschnitt (13) der Werkzeugspindel (10) drehfest und axial verschiebbar innerhalb des Rotors (15) des Werkzeugspindel-Antriebsmotors (14) aufgenommen ist.

7. Antriebseinheit gemäß einem der vorhergehenden Ansprüche, **dadurch gekennzeichnet, dass** der Spindeltrieb-Antriebsmotor (2) und/oder der Werkzeugspindel-Antriebsmotor (14) als Servomotor ausgebildet ist.

8. Antriebseinheit gemäß einem der vorhergehenden Ansprüche, **dadurch gekennzeichnet, dass** das Gehäuse (1) einen ersten Gehäuseteil aufweist, der ein Innenvolumen ausbildet, wobei ein zweiter Gehäuseteil, an dem der Spindeltrieb-Antriebsmotor (2) und/oder der Werkzeugspindel-Antriebsmotor (14) drehfest befestigt ist, innerhalb des Innenvolumens des ersten Gehäuseteils drehfest und axial festgelegt angeordnet ist.

## Claims

1. Drive unit having a spindle drive and a spindle-drive drive motor, the spindle-drive drive motor having a rotor (4), and a spindle (6) of the spindle drive being arranged within the rotor (4) which acts as a spindle nut and comprises a hollow shaft (5), **characterized in that** the axially movable spindle (6) is guided such that it cannot rotate in a housing (1) of the drive unit, the spindle having an anti-rotation safeguard which comprises a plurality of guide pins (8) which are connected at one longitudinal axial end to a spindle main body (7) and are guided in an axially movable manner in complementary guide openings (9) of the housing (1).

2. Drive unit according to Claim 1, **characterized in that** the spindle drive is configured as a ball screw drive or as a roller screw drive.

3. Drive unit according to either of the preceding claims, **characterized in that** a tool spindle (10) is mounted in a rotatable and axially fixed manner within the spindle (6) which comprises a hollow shaft.

4. Drive unit according to Claim 3, **characterized in that** the tool spindle (10) has a tool receptacle head (11) for a drilling tool (12) on the end side.

5. Drive unit according to one of the preceding claims, **characterized in that** the drive unit comprises a tool-spindle drive motor (14).

6. Drive unit according to one of the preceding claims, **characterized in that** the tool-spindle drive motor (14) has a rotor (15) which comprises a hollow shaft, a coupling section (13) of the tool spindle (10) being received such that it cannot rotate and can be displaced axially within the rotor (15) of the tool-spindle drive motor (14).

7. Drive unit according to one of the preceding claims, **characterized in that** the spindle-drive drive motor (2) and/or the tool-spindle drive motor (14) are/is configured as a servomotor.

8. Drive unit according to one of the preceding claims, **characterized in that** the housing (1) has a first housing part which configures an internal volume, a second housing part, to which the spindle-drive drive motor (2) and/or the tool-spindle drive motor (14) are/is fastened such that they/it cannot rotate, being arranged within the internal volume of the first housing part such that it cannot rotate and in an axially fixed manner.

## Revendications

1. Unité d'entraînement avec un mécanisme à broche et un moteur d'entraînement de mécanisme à broche, dans laquelle le moteur d'entraînement de mécanisme à broche présente un rotor (4), une broche (6) du mécanisme à broche est disposée à l'intérieur du rotor (4) agissant comme écrou de broche et comprenant un arbre creux (5), **caractérisée en ce que** la broche mobile axialement (6) est guidée de façon calée en rotation dans un carter (1) de l'unité d'entraînement, dans laquelle la broche présente un blocage de rotation, qui comprend plusieurs tourillons de guidage (8) assemblés à un corps principal de broche (7) à une extrémité longitudinalement axiale, qui sont guidés de façon mobile axialement dans des ouvertures de guidage complémentaires (9) du carter (1).

2. Unité d'entraînement selon la revendication 1, **caractérisée en ce que** le mécanisme à broche est formé par une vis d'entraînement à billes ou une vis d'entraînement à rouleaux.

3. Unité d'entraînement selon l'une quelconque des revendications précédentes, **caractérisée en ce qu'**une broche porte-outil (10) est montée de façon rotative et axialement fixée à l'intérieur de la broche (6) comprenant un arbre creux.

4. Unité d'entraînement selon la revendication 3, **caractérisée en ce que** la broche porte-outil (10) présente en extrémité une tête porte-outil (11) pour un outil de forage (12).

5. Unité d'entraînement selon l'une quelconque des revendications précédentes, **caractérisée en ce que** l'unité d'entraînement comprend un moteur d'entraînement de broche porte-outil (14).

6. Unité d'entraînement selon l'une quelconque des revendications précédentes, **caractérisée en ce que** le moteur d'entraînement de broche porte-outil (14) présente un rotor (15) comprenant un arbre creux, dans laquelle une partie de couplage (13) de la broche porte-outil (10) est logée de façon calée en rotation et axialement déplaçable à l'intérieur du rotor (15) du moteur d'entraînement de broche porte-outil (14).

7. Unité d'entraînement selon l'une quelconque des revendications précédentes, **caractérisée en ce que** le moteur d'entraînement de mécanisme à broche (2) et/ou le moteur d'entraînement de broche porte-outil (14) est formé par un servomoteur.

8. Unité d'entraînement selon l'une quelconque des revendications précédentes, **caractérisée en ce que** le carter (1) présente une première partie de carter, qui forme un volume intérieur, dans laquelle une seconde partie de carter, à laquelle le moteur d'entraînement de mécanisme à broche (2) et/ou le moteur d'entraînement de broche porte-outil (14) est fixé de façon calée en rotation, est disposée de façon calée en rotation et axialement fixée à l'intérieur du volume intérieur de la première partie de carter.
